# EUROPÄISCHE PATENTSCHRIFT

(11) **EP 1 637 396 B1**
(45) Veröffentlichungstag und Bekanntmachung des Hinweises auf die Patenterteilung: **30.09.2009**
(21) Anmeldenummer: 05017449.9
(22) Anmeldetag: 11.08.2005
(51) Int. Cl.: B60Q 1/26

(54) **Kraftfahrzeug mit Rückleuchten**
Motor vehicle with rear lights
Véhicule automobile muni de feux arrières

(30) Priorität: 17.09.2004 DE 102004045200
(43) Veröffentlichungstag der Anmeldung: 22.03.2006
(73) Patentinhaber: GM Global Technology Operations, Inc., Detroit, MI 48265-3000 (US)
(72) Erfinder: Wittorf, Marten, 55218 Ingelheim (DE)
(74) Vertreter: Daniel, Ulrich W.P.

(56) Entgegenhaltungen:
- US-A- 2 901 285
- US-A- 5 150 939
- US-A1- 2003 164 622

## Beschreibung

Die Erfindung bezieht sich auf ein Kraftfahrzeug mit seitlich im Heck gegenüberliegend angeordneten, jeweils ein Gehäuse umfassenden Rückleuchten und mit einer sich zwischen den Rückleuchten erstreckenden, einen Laderaum verschließenden Heckklappe.

Die DE 84 19 381.6 U1 zeigt einen Anhänger zum Abschleppen und Transport von Fahrzeugen, dessen Ladefläche zum Be- und Entladen abkippbar ist, wobei während des Abkippvorgangs die Rückleuchten automatisch aus dem Ladebereich geschwenkt werden. Die Schwenkbewegung der Rückleuchten erfolgt durch deren Verbindung mit einer den Kippvorgang erzeugenden Zugdeichselanlage mittels geeigneter Elemente, wie z. B. an Kniehebeln angelenkten Zug- und Druckstangen oder Zugseilen in Verbindung mit Federn, zur Zurückstellung der Leuchtenträger.

In der DE 93 11 504 U1 sind elektrisch schwenkbare Kraftfahrzeug-Rückleuchten offenbart, die jeweils um 360° drehbar in einem Gehäuse angeordnet sind. Hierbei befindet sich jeweils eine Rückfahrleuchte in einem Stück hinter der eigentlichen Rückleuchte und beim Einlegen des Rückwärtsganges drehen sich die Rückleuchten von selbst herum.

Im Weiteren offenbart die US-A-5 150 939 ein gattungsgemäßes Kraftfahrzeug mit seitlich im Heck gegenüberliegend angeordneten, jeweils ein Gehäuse umfassenden Rückleuchten, wobei das Gehäuse einer der Rückleuchten schwenkbar am Heck gelagert ist.

Darüber hinaus ist aus der U-A-2 901 285 ein Kraftfahrzeug bekannt, das mit seitlich im Heck gegenüberliegend angeordneten, jeweils ein Gehäuse umfassenden Rückleuchten und mit einer sich zwischen den Rückleuchten erstreckenden, einen Laderaum verschließenden Heckklappe ausgestattet ist. Die Rückleuchten sind in dieser Ausgestaltung des Kraftfahrzeuges starr befestigt und zumindest eine der Rückleuchten ist als Lagerstelle für eine seitliche Klappe ausgebildet. In einer alternativen Ausführungsform erfolgt das Verschwenken zumindest einer der Rückleuchten gemeinsam mit der seitlich verschwenkbar angelenkten Heckklappe, die sich demzufolge nicht zwischen den Rückleuchten erstreckt.

Bei heutigen Kraftfahrzeugen tritt oft ein Konflikt zwischen einem Fahrzeugstyling und einem Nutzwert des Kraftfahrzeuges auf. Eine interessant gestaltete Heckpartie mit großzügigen Rückleuchten erlaubt oftmals keine allzu großzügige Durchladebreite bzw. Heckklappenöffnung für einen Laderaum. Diese eingeschränkte Durchladebreite erschwert ein Beladen des Kraftfahrzeuges mit großen Gegenständen und kann unter Umständen sogar zu Beschädigungen der Rückleuchten führen.

Es ist bei Kraftfahrzeugen bekannt, Rückleuchten als Säulen jeweils in Seitenbereichen des Hecks vertikal neben einer Heckklappe anzuordnen. Zudem sind Kraftfahrzeuge bekannt, bei denen die Rückleuchten geteilt ausgestaltet sind, wobei jeweils ein Teil im Seitenbereich des Hecks und ein Teil in der Heckklappe integriert ist.

Der Erfindung liegt die Aufgabe zugrunde, ein Kraftfahrzeug der eingangs genannten Art zu schaffen, bei dem mit einfachen Mitteln eine vergrößerte Beladungsöffnung des Laderaums erreicht wird.

Die Aufgabe wird erfindungsgemäß durch die Merkmale des Anspruchs 1 gelöst.

Indem die Rückleuchten einfach mit ihrem Gehäuse aus der Gebrauchsposition herausgeschwenkt werden können, ergibt sich somit eine wesentliche Vergrößerung der Beladungsöffnung bzw. der Durchladebreite bei geöffneter Heckklappe, wodurch ein Beladen des Kraftfahrzeuges mit großen Gegenständen erleichtert wird und zudem Beschädigungen der Rückleuchten vermieden werden.

In Ausgestaltung der Erfindung ist das Gehäuse an der dem Drehelement gegenüberliegenden Seite mit einer Rasteinrichtung versehen. Das Drehelement kann als Scharnier ausgebildet sein. In der Ausschwenkposition des Gehäuses ist bevorzugt eine Rückwand desselben parallel zur Längsachse des Kraftfahrzeuges ausgerichtet. Dadurch sind an der Rückwand vorgesehene elektrische Steckverbindungen leicht zugänglich. Weiterhin ist das Drehelement derart ausgebildet, dass bei geöffneter Heckklappe und entriegeltem Gehäuse das Gehäuse von dem Heck abnehmbar ist. Dies ermöglicht eine einfache Austauschbarkeit der Rückleuchte. Durch die kraftformschlüssige Verrastung des Gehäuses mit einem Karosserieelement kann dieses nicht selbsttätig bzw. ungewollt aus der Gebrauchsposition herausschwenken. Dies ist vielmehr nur durch besondere Betätigung der Rasteinrichtung möglich. Alternativ kann vorgesehen sein, dass beim Öffnen der Heckklappe mittels einer Kinematik zwischen der Heckklappe und dem Gehäuse das Gehäuse selbsttätig entriegelt und anschließend in die Ausschwenkposition verschwenkt wird.

Die ausschwenkbaren Rückleuchten eignen sich insbesondere zur Verwendung an so genannten Combi- oder Caravanfahrzeugen, wobei selbstverständlich auch alle anderen Kraftfahrzeugtypen mit derartigen Rückleuchten versehen werden können.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:
- Fig. 1: eine Teil-Heckansicht eines erfindungsgemäßen Kraftfahrzeuges,
- Fig. 2: eine perspektivische Ansicht der Darstellung nach Fig. 1 mit angedeuteter geöffneter Heckklappe und ausgeschwenkter Rückleuchte,
- Fig. 3: eine Prinzipskizze der Gesamt-Heckansicht nach Fig. 1 mit den erfindungszugehörigen Bauteilen und
- Fig. 4: eine Prinzipskizze in einer Draufsicht auf die Rückleuchten nach der Darstellung gem. Fig. 3 mit gestrichelt angedeuteter ausgeschwenkter linker Rückleuchte.

In den unterschiedlichen Figuren sind gleiche Teile stets mit denselben Bezugszeichen versehen, weswegen diese in der Regel auch nur einmal beschrieben werden.

Das Heck 1 des Kraftfahrzeuges 2 weist eine Heckklappe 3 auf, die zum Öffnen und Schließen schwenkbar an dem Heck 1 angelenkt ist. In dem Heck 1 ist in Querrichtung gesehen beidseitig jeweils eine Rückleuchte 4 angeordnet, von denen lediglich die linke Rückleuchte 4 dargestellt ist. Nachfolgend wird nur diese Rückleuchte 4 beschrieben, da die dazu gegenüberliegende rechte Rückleuchte 4 identisch ausgestaltet ist. Die Rückleuchte 4 weist ein Blinklicht 5, ein Bremslicht 6 und ein Rückfahrlicht 7 innerhalb eines Gehäuses 8 auf, das aus einer Gebrauchsposition 9 in eine Ausschwenkposition 10 überführbar ist und umgekehrt. Das Gehäuse 8 ist über zwei zueinander beabstandete, übereinander liegende Drehelemente 11 mit einem Seitenbereich 12 des Hecks 1 drehbar verbunden. Die Drehelemente 11 sind jeweils als Scharnier ausgestaltet. Mit der den Drehelementen 11 gegenüberliegenden Seite ist das Gehäuse 8 über eine Rasteinrichtung 13 lösbar mit einem Karosserieelement verbunden. Hierzu sind an dem Gehäuse 6 entsprechende Rastmittel und an der Karosserie dazu korrespondierende Gegenrastmittel vorgesehen.

Wenn das Gehäuse 8 der Rückleuchte 4 nach dem Lösen der Rasteinrichtung 13 und dem Öffnen der Heckklappe 3 aus der Gebrauchsposition 9 herausgeschwenkt wird, ergibt sich eine Vergrößerung der Beladungsöffnung des Laderaums 14 des Kraftfahrzeuges 2. In der Ausschwenkposition 10 verläuft eine Rückwand 15 des Gehäuses 8 im Wesentlichen parallel zu einer Längsachse des Kraftfahrzeuges 2. Daher wird neben der Vergrößerung der effektiven Beladungsöffnung des Laderaumes 14 noch zusätzlich erreicht, dass die jeweiligen Lichter der Rückleuchte 4 zu Austausch- bzw. Reparaturzwecken leicht zugänglich sind.

Die Drehelemente 11 zwischen dem Gehäuse 8 und dem Seitenbereich 12 des Hecks 1 sind derart ausgebildet, dass sich das Gehäuse 8 von den Drehelementen 11 trennen lässt. Hierzu muss die Rückleuchte 4 mit ihrem Gehäuse 8 lediglich aus den Drehelementen 11 durch leichtes Herausheben entfernt werden, wobei die Stromversorgungsleitungen der Lichter der Rückleuchte 4 an ihren Steckverbindungen 16 vor oder nach dem Entfernen des Gehäuses 6 zu unterbrechen sind.

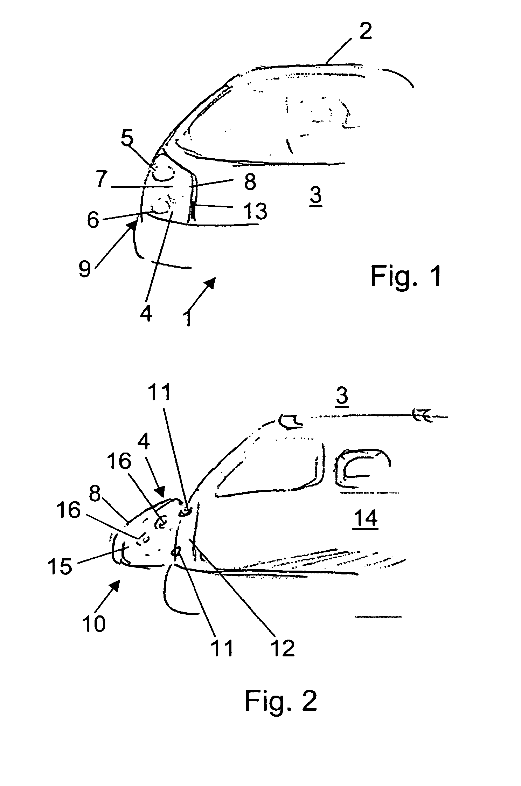

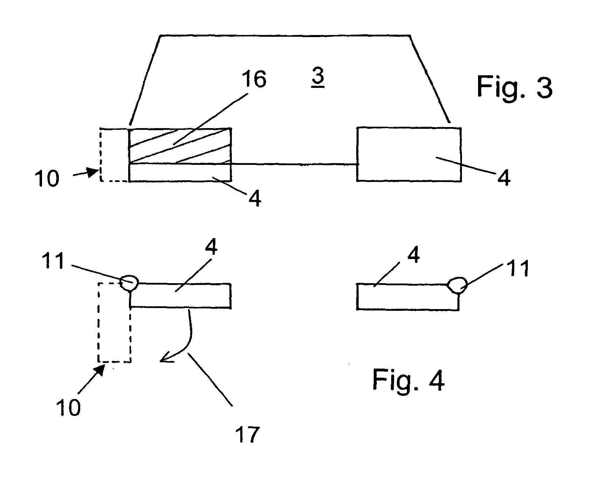

In Fig. 3 ist die Darstellung der Fig. 1 als Prinzipskizze gezeigt. Hierbei stellt ein schraffierter Bereich 16 der linken Rückleuchte 4 eine gewonnene Vergrößerung der Beladungsöffnung dar, wenn die Rückleuchte 4 aus der Gebrauchsposition 9 in die Ausschwenkposition 10 herausgeschwenkt ist, wobei die Ausschwenkposition 10 gestrichelt angedeutet ist. Die Fig. 4 zeigt die Darstellung nach Fig. 3 in einer Draufsicht, wobei die linke Rückleuchte 4 in einem Teilkreisabschnitt um 90° bezogen auf eine Querachse des Kraftfahrzeuges 2 gemäß dem Pfeil 17 in die gestrichelt angedeutete Ausschwenkposition 10 geschwenkt ist.

Durch die schwenkbare Ausgestaltung der Rückleuchte 4 ergibt sich eine verbesserte Kompromissmöglichkeit zwischen einem Kraftfahrzeugstyling und einem Kraftfahrzeugnutzwert. Zum einen erhält das Kraftfahrzeug 2 ein Aufmerksamkeit erregendes Feature, das eine Vergrößerung der Beladungsöffnung des Laderaums 14 ermöglicht. Zum anderen sind nach einem Herausschwenken der Rückleuchte 4 in die Ausschwenkposition 10 andere, versteckte Komponenten, wie z. B. Stecker, ein Waschwasserreservoir oder Ablagen, beispielsweise für Warndreiecke oder Werkzeug, hinter der Rückleuchte 4 in dem Seitenbereich 12 des Hecks 1 leicht zugänglich. Die Rückleuchte 4 hat also quasi die Funktion einer Klappe.

### Bezugszeichenliste

- 1.: Heck
- 2.: Kraftfahrzeug
- 3.: Heckklappe
- 4.: Rückleuchte
- 5.: Blinklicht
- 6.: Bremslicht
- 7.: Rückfahrlicht
- 8.: Gehäuse
- 9.: Gebrauchsposition
- 10.: Ausschwenkposition
- 11.: Drehelemente
- 12.: Seitenbereich v. 1
- 13.: Rasteinrichtung
- 14.: Laderaum
- 15.: Rückwand v. 8
- 16.: Steckverbindungen
- 17.: Pfeil

## Patentansprüche

1. Kraftfahrzeug mit seitlich im Heck (1) gegenüberliegend angeordneten, jeweils ein Gehäuse (8) umfassenden Rückleuchten (4) und mit einer einen Laderaum (14) verschließenden Heckklappe (3)
wobei das Gehäuse (8) zumindest einer jeder Rückleuchten (4) derart schwenkbar am Heck (1) gelagert ist, dass das Gehäuse (8) in eine Ausschwenkposition (10) zur Vergrößerung der Beladungsöffnung des Laderaumes (14) überführbar ist, wobei das Gehäuse (8) über zumindest ein Drehelement (11) mit einem Seitenbereich (12) des Hecks (1) verbunden ist, **dadurch gekennzeichnet, dass** die Heckklappe sich zwischen den Rückleuchten (4) erstreckt, und dass das Drehelement (11) derart ausgebildet ist, dass bei geöffneter Heckklappe (3) und entriegeltem Gehäuse (8) das Gehäuse (8) von dem Heck (1) abnehmbar ist.

2. Kraftfahrzeug nach Anspruch 1, **dadurch gekennzeichnet, dass** das Gehäuse (8) mit einer Rasteinrichtung (13) versehen ist.

3. Kraftfahrzeug nach Anspruch 1 oder 2 **dadurch gekennzeichnet, dass** in der Ausschwenkposition (10) des Gehäuses (8) eine Rückwand (15) desselben parallel zur Längsachse des Kraftfahrzeuges (2) ausgerichtet ist.

4. Kraftfahrzeug nach einem der Ansprüche 1 bis 3, **dadurch gekennzeichnet, dass** beim Öffnen der Heckklappe (3) mittels einer Kinematik zwischen der Heckklappe (3) und dem Gehäuse (8) das Gehäuse (8) selbsttätig entriegelt und anschließend in die Ausschwenkposition (10) verschwenkt wird.

## Claims

1. A motor vehicle with rear lights (4) which are arranged laterally in the rear (1) opposite of one another and each comprise a housing (8) and a tailgate (3) sealing a loading space (14), with the housing (8) of at least one each of the rear lights (4) being held in a pivoting manner on the rear (1) in such a way that the housing (8) can be moved to an outwardly swiveled position (10) for enlarging the loading opening of the of the loading space (14), with the housing (8) being connected with a lateral region (12) of the rear (1) via at least one rotating element (11), **characterized in that** the tailgate extends between the rear lights (4) and the rotating element (11) is arranged in such a way that the housing (8) can be removed from the rear (1) when the tailgate (3) is opened and the housing (8) is unlocked.

2. A motor vehicle according to claim 1, **characterized in that** the housing (8) is provided with a latching device (13).

3. A motor vehicle according to claim 1 or 2, **characterized in that** in the outwardly swiveled position (10) of the housing (8) a rear wall (15) of the same is aligned parallel to the longitudinal axis of the motor vehicle (2).

4. A motor vehicle according to one of the claims 1 to 3, **characterized in that** the housing (8) is automatically unlocked during the opening of the tailgate (3) by means of a kinematic device between the tailgate (3) and the housing (8) and is thereafter pivoted to the outwardly swiveled position (10).

## Revendications

1. Véhicule à moteur avec des feux arrière (4) disposés latéralement à l'arrière (1) à l'opposé l'un de l'autre et comprenant chacun un bloc (8) et avec un capot arrière (3) fermant un coffre (14), dans lequel le bloc (8) d'au moins un de chacun des feux arrière (4) est supporté sur l'arrière (1) avec possibilité de pivotement de telle sorte que le bloc (8) puisse être amené dans une position pivotée vers l'extérieur (10) pour agrandir l'ouverture de chargement du coffre (14), le bloc (8) étant relié par au moins un élément pivotant (11) à une partie latérale (12) de l'arrière (1), **caractérisé en ce que** le capot arrière s'étend entre les feux arrière (4) et **en ce que** l'élément pivotant (11) est conformé de telle manière que lorsque le capot arrière (3) est ouvert et le bloc (8) déverrouillé, le bloc (8) puisse être enlevé de l'arrière (1).

2. Véhicule à moteur selon la revendication 1, **caractérisé en ce que** le bloc (8) est muni d'un dispositif d'encliquetage (13).

3. Véhicule à moteur selon la revendication 1 ou 2, **caractérisé en ce qu'**une paroi arrière (15) du bloc (8) est orientée parallèlement à l'axe longitudinal du véhicule à moteur (2) quand le bloc est dans la position pivotée vers l'extérieur (10).

4. Véhicule à moteur selon l'une des revendications 1 à 3, **caractérisé en ce que** lors de l'ouverture du capot arrière (3), un mécanisme cinématique entre le capot arrière (3) et le bloc (8) déverrouille automatiquement le bloc (8) et le fait ensuite pivoter dans la position pivotée vers l'extérieur (10).
